# FASCICULE DE BREVET EUROPEEN

(11) **EP 2 788 610 B1**
(45) Date de publication et mention de la délivrance du brevet: **23.01.2019**
(21) Numéro de dépôt: 12768730.9
(22) Date de dépôt: 01.10.2012
(51) Int. Cl.: F02M 25/12

(54) **DISPOSITIF DE CENTRIFUGATION DE L'AIR**
LUFTZENTRIFUGENVORRICHTUNG
AIR CENTRIFUGE DEVICE

(30) Priorité: 11.10.2011 FR 1103087
(43) Date de publication de la demande: 15.10.2014
(73) Titulaire: Prieur, Andre, 92250 La Garenne Colombes (FR)
(72) Inventeur: Prieur, Andre, 92250 La Garenne Colombes (FR)
(86) Numéro de dépôt international: PCT/EP2012/004116
(87) Numéro de publication internationale: WO 2013/053443

(56) Documents cités:
- DE-A1- 10 050 897
- US-A- 4 351 302
- US-A1- 2005 199 231
- US-A1- 2007 101 975

## Description

La présente invention se rapporte à un dispositif de centrifugation de l'air, permettant de séparer les molécules de dioxygène et de di-azote. L'invention trouve une application particulièrement avantageuse dans le domaine des moteurs à combustion interne, et plus spécifiquement dans le domaine des véhicules automobiles équipés d'un tel moteur.

D'une manière générale, les moteurs à combustion interne comportent un circuit d'alimentation d'air, qui comprend en particulier un filtre à air et éventuellement différents dispositifs tels un ou plusieurs compresseurs ou turbocompresseurs destinés à comprimer l'air admis au niveau des chambres de combustion du moteur.

L'air frais prélevé à l'extérieur constitue en général le principal comburant admis au niveau des chambres de combustion et se trouve composé, dans les conditions normales de température et pression, d'un mélange comportant, outre de la vapeur d'eau, un extrait sec constitué d'environ 78,1% de di-azote et 20,9% de dioxygène en volume, plus environ 1% d'autres gaz, tels l'argon et le dioxyde de carbone. Ces proportions ramenées aux masses sont respectivement de 75,5% pour le di-azote et 23,1% pour le dioxygène.

Le système de contrôle du moteur à combustion interne est en principe prévu en fonction de ces proportions, qui peuvent éventuellement varier en fonction des conditions climatiques ou de l'altitude. Les systèmes de contrôle moteur sont en principe prévus pour optimiser le rendement de la combustion et minimiser les émissions de gaz polluants, dont en particulier les oxydes de carbone et oxydes d'azote. L'inconvénient de ces divers systèmes est que la composition de l'air frais que l'on retrouve dans les gaz d'admission n'est pas facilement ajustable, en particulier la proportion en dioxygène, et qu'en conséquence les rendements thermodynamiques et optimisations des émissions polluantes - par traitement postcombustion par exemple - ne sont pas facilement maîtrisables.

La présente invention propose une solution pour remédier en partie à cette difficulté, en décrivant un procédé permettant de modifier les proportions de dioxygène et de di-azote admis dans les chambres de combustion, grâce à l'ajout d'un dispositif de centrifugation à très grande vitesse, mettant à profit les différences de masses volumiques du dioxygène, soit 1,429 kg/m3, et du di-azote, soit 1,251 kg/m3, afin de séparer ces deux gaz. Ainsi, les molécules de dioxygène peuvent être séparées des molécules de di-azote par hyper-centrifugation, puis récupérées pour être acheminées par un conduit relié au circuit d'alimentation d'air du moteur à combustion interne, ledit conduit pouvant être associé à une vanne commandée permettant ainsi de moduler la proportion de dioxygène admise dans ledit circuit d'alimentation d'air. Afin d'expliquer ce principe et purement à titre d'exemple, nous prendrons le cas d'un dispositif comprenant une roue munie d'ailettes, avec une vitesse de rotation permettant de rester dans le domaine subsonique. La vitesse du son dans le dioxygène à 20°C sous la pression atmosphérique est de 317 m/s. Pour le di-azote, dans les mêmes conditions, cette vitesse est de 334,5 m/s. Ainsi, en prenant pour hypothèse une vitesse en extrémité des ailettes de 300 m/s, nous restons dans tous les cas en-deçà du domaine supersonique, compte tenu des pressions et températures de fonctionnement. Nous prendrons pour hypothèse le cas d'une roue de circonférence 100 mm, soit un rayon r d'environ 16 mm. Pour atteindre une vitesse en périphérie de la roue V = 300 m/s, la vitesse de rotation sera de 3000 tours/s, soit 180 000 tours/mn, ce qui reste dans les ordres de grandeurs usuels, par exemple, pour les turbocompresseurs. L'accélération centrifuge subie en périphérie de la roue (V²/r) sera d'environ 5,65 x 10E6 m/s², soit plus de 576 000 fois la valeur de la gravitation terrestre, (9,81 m/s²); l'accélération centrifuge viendra s'opposer aux forces provenant de l'agitation moléculaire au sein de la masse d'air en rotation rapide. Ainsi, nous pouvons aisément calculer que la centrifugation dans les conditions ci-dessus d'un volume de 1 cm3 de dioxygène pris sous pression atmosphérique, soit une masse correspondante de 1,429 mg, représente une force centrifuge de 8,08 N, tandis que pour un volume de 1 cm3 de di-azote pris dans les mêmes conditions, soit une masse de 1,251 mg, la force centrifuge n'est que de 7,07 N. Ce déséquilibre engendre une pression différentielle entre les 2 gaz à proximité de la circonférence du dispositif de centrifugation, ce qui génère un phénomène de séparation entre le dioxygène, plus « lourd », et le di-azote, plus « léger ». Le dioxygène se trouve donc rejeté à la périphérie du dispositif de centrifugation, dans un état légèrement comprimé, ce qui permet de le récupérer grâce à différents dispositifs décrits ci-après.

La présente invention propose un dispositif de centrifugation de l'air, associé à un moteur à combustion interne, ledit dispositif de centrifugation de l'air comportant une roue montée sur un axe et placée dans une enveloppe la contenant, ladite enveloppe étant de forme préférentiellement circulaire, l'ensemble étant pourvu d'au moins un orifice d'aspiration de l'air et d'au moins deux sorties distinctes prévues pour récupérer séparément les molécules de dioxygène, d'une part, et de di-azote, d'autre part, tandis qu'au moins une conduite de raccordement est prévue entre la sortie du dioxygène et le circuit d'alimentation d'air du moteur à combustion interne, ladite conduite de raccordement pouvant être munie d'une vanne commandée, permettant de doser la quantité de dioxygène admise dans le circuit d'alimentation d'air. Selon l'invention, le di-azote peut être simplement rejeté vers l'extérieur, cela ne présentant aucun risque pour l'environnement dans le cas d'une utilisation dans un milieu normalement ventilé. Si à l'inverse le di-azote est jugé utile pour la combustion ou pour tout autre usage, il est possible de l'isoler et de le canaliser par un ensemble de conduites et de vannes adaptées.
Selon l'invention, le dispositif de centrifugation de l'air peut se situer en amont ou en aval du ou des éventuels compresseurs ou turbocompresseurs prévus dans le circuit d'alimentation d'air. Selon l'invention, ladite roue mentionnée ci-avant comporte des ailettes conçues selon l'état de l'art, permettant d'accélérer les gaz par entraînement rotatif, afin de générer le phénomène de centrifugation. L'axe de ladite roue est entraîné en rotation à très grande vitesse au moyen d'un moteur et d'un organe de transmission adaptés à ce besoin ou bien, de façon plus avantageuse, par récupération au moyen d'une turbine, de l'enthalpie des gaz d'échappement du moteur à combustion interne, selon le principe bien connu utilisé pour les turbocompresseurs. La solution retenue pour la séparation des gaz étant la mise à profit de la force centrifuge, l'introduction de l'air se fait de façon avantageuse au niveau de la partie centrale de l'enveloppe du dispositif de centrifugation de l'air, tandis que les deux sorties distinctes sont placées sur ladite enveloppe, respectivement à une position intermédiaire entre le centre de la roue et la périphérie de ladite roue pour ce qui concerne le di-azote, et à une position proche de la périphérie de ladite roue, pour ce qui concerne le dioxygène. Selon l'invention, la forme de l'enveloppe, pour la partie située à proximité de la périphérie de ladite roue, est adaptée en vue de faciliter la récupération du dioxygène et comporte à cet effet une section élargie permettant de constituer une lame de gaz d'épaisseur adaptée, correspondant à la concentration optimale en dioxygène.

Une variante du dispositif de centrifugation de l'air objet de la présente invention, consiste à prévoir la récupération du dioxygène grâce à une multitude d'orifices de faibles dimensions situés sur l'enveloppe, à proximité de la circonférence de ladite roue. Cette disposition permet d'optimiser la récupération du dioxygène en offrant une surface plus importante avec une meilleure perméabilité qu'une simple sortie localisée dans une zone limitée, tandis qu'une deuxième enveloppe recouvrant la première, permettra de récupérer le dioxygène extrait pour le diriger vers le circuit d'alimentation d'air du moteur à combustion interne.

Une variante de l'enveloppe du dispositif de centrifugation objet de la présente invention, consiste à prévoir une zone poreuse située sur la circonférence de ladite enveloppe, ladite zone poreuse pouvant être constituée à titre d'exemple par une membrane semi perméable, autorisant le passage des molécules de dioxygène qui sont de taille plus réduite que les molécules de di-azote, avec un diamètre moléculaire de 0,292 nm, tout en limitant le passage des molécules de di-azote, de taille plus importante, avec un diamètre moléculaire de 0,315 nm. Cette solution facilite ainsi la séparation entre les molécules de dioxygène et les molécules de di-azote.

Une variante de l'invention consiste à ajouter un dispositif de refroidissement d'air en amont du dispositif de centrifugation de l'air, afin de réduire dans une certaine mesure l'agitation moléculaire de l'air avant centrifugation et par conséquent favoriser les effets de la force centrifuge dans la séparation entre le dioxygène et le di-azote. Ledit dispositif de refroidissement d'air qui ne sera pas décrit ici, peut être de même nature que les dispositifs bien connus dans l'état de l'art et qui sont utilisés pour refroidir l'air de suralimentation fourni par les turbocompresseurs.

Une variante de l'invention consiste à modifier l'enveloppe d'un turbocompresseur par ajout d'orifices placés sur la périphérie dudit turbocompresseur, afin de récupérer les molécules de dioxygène présentes à l'extrémité des ailettes. Un orifice placé sur l'enveloppe du turbocompresseur, en position intermédiaire entre l'axe de la roue du compresseur et la périphérie de l'enveloppe, permettra d'évacuer l'excès de di-azote. Cette solution permet de combiner en un seul et même organe, les fonctions de suralimentation et de séparation du dioxygène et du di-azote par centrifugation.

D'autres buts et avantages de la présente invention apparaîtront dans la description qui va suivre, ayant valeur d'exemple non limitatif et dont la compréhension sera facilitée en se référant aux figures ci-jointes, qui illustrent de façon schématique un mode de réalisation du dispositif proposé par l'invention :
- Fig. 1 : Schéma du dispositif de centrifugation de l'air (1), vue de côté
- Fig. 2 : Schéma du dispositif de centrifugation de l'air (1), vue de dessus
- Fig. 3 : Schéma concernant la section de l'enveloppe (13) du dispositif de centrifugation
- Fig. 4 : Schéma d'une variante de l'enveloppe (13) consistant à disposer une multitude d'orifices en périphérie de celle-ci, afin d'optimiser la récupération du dioxygène
- Fig. 5 : Schéma d'une variante de l'enveloppe (13) consistant à ajouter une zone poreuse (132) en périphérie de celle-ci, afin d'optimiser la séparation dioxygène - di-azote
- Fig. 6 : Schéma d'une variante de l'invention par ajout d'un dispositif de refroidissement d'air (4) en amont du dispositif de centrifugation de l'air (1)
- Fig. 7 : Schéma d'une variante de l'invention qui consiste à modifier un turbocompresseur (5) afin d'obtenir la séparation entre dioxygène et di-azote

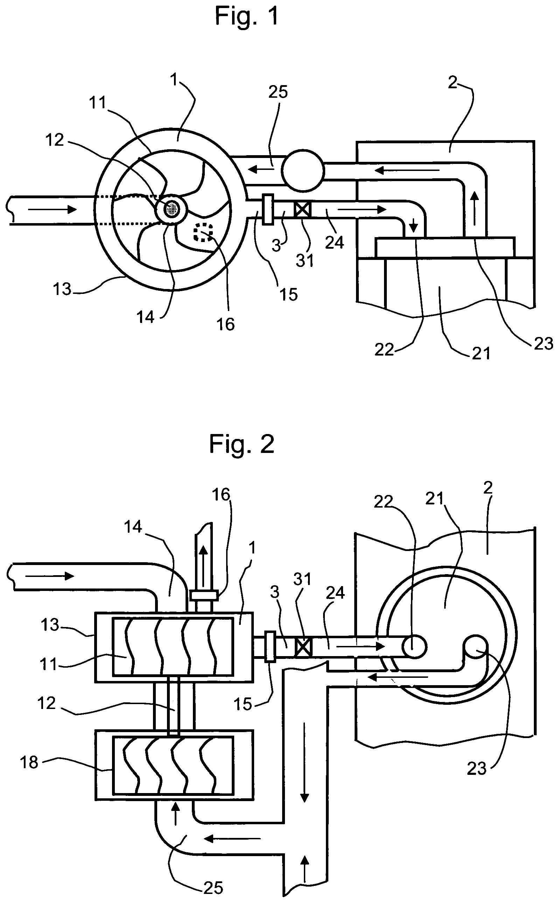

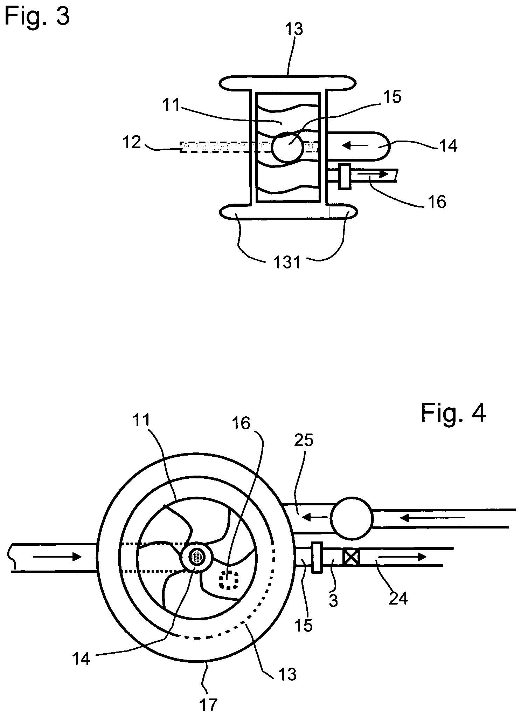

La présente invention propose un dispositif de centrifugation de l'air (1), (Fig. 1 et Fig. 2), associé à un moteur à combustion interne (2) comportant au moins un cylindre (21), alimenté en air par une arrivée d'air (22), et rejetant les gaz de combustion par un orifice d'échappement (23), ledit dispositif de centrifugation de l'air (1) comportant une roue (11), montée sur un axe (12) et placée dans une enveloppe (13) contenant ladite roue (11), ladite enveloppe (13) étant de forme préférentiellement circulaire, l'ensemble étant pourvu d'au moins un orifice d'aspiration de l'air (14) et d'au moins deux sorties distinctes (15) et (16) prévues pour récupérer séparément les molécules de dioxygène d'une part, à la sortie (15), et de di-azote d'autre part, à la sortie (16), tandis qu'au moins une conduite de raccordement (3) est prévue entre la sortie (15) de récupération du dioxygène et le circuit d'alimentation d'air (24) du moteur à combustion interne (2), ladite conduite de raccordement (3) pouvant être munie d'une vanne commandée (31), permettant de doser la quantité de dioxygène admise dans le circuit d'alimentation d'air (24). Selon l'invention, le dispositif de centrifugation de l'air (1) peut se situer en amont ou en aval du ou des éventuels compresseurs ou turbocompresseurs prévus dans le circuit d'alimentation d'air (24).
Selon l'invention, la roue (11) dispose d'ailettes, conçues selon l'état de l'art, permettant d'accélérer les gaz par entraînement rotatif, afin de générer le phénomène de centrifugation. Dans l'exemple de réalisation proposé ici (Fig. 2), l'axe (12) de la roue (11) est entraîné en rotation à très grande vitesse, au moyen d'une turbine (18) placée en série avec des éléments de la ligne d'échappement (25) du moteur à combustion interne (2), selon le principe bien connu utilisé pour les turbocompresseurs. L'introduction de l'air dans le dispositif de centrifugation de l'air (1) se fait au niveau de la partie centrale de l'enveloppe (13) dudit dispositif, tandis que la sortie (15) prévue pour récupérer le dioxygène est située sur l'enveloppe (13) à une position proche de la périphérie de la roue (11), alors que la sortie (16) prévue pour évacuer le di-azote est également située sur l'enveloppe (13), mais à une position intermédiaire entre le centre de la roue (11) et la périphérie de ladite roue (11).
Selon l'invention, la forme de l'enveloppe (13), pour la partie située à proximité de la périphérie de la roue (11), est adaptée en vue de faciliter la récupération du dioxygène et comporte à cet effet une section élargie (131), (Fig. 3), permettant de constituer une lame de gaz d'épaisseur adaptée, correspondant à la concentration optimale en dioxygène.

Une variante du dispositif de centrifugation de l'air (1) objet de la présente invention, consiste à prévoir la récupération du dioxygène grâce à une multitude d'orifices de faibles dimensions situés sur l'enveloppe (13), à proximité de la circonférence de la roue (1 1), (Fig. 4). Dans ce cas, une deuxième enveloppe (17), recouvrant la première enveloppe (13), permettra de récupérer le dioxygène extrait pour le diriger vers le circuit d'alimentation d'air (24) du moteur à combustion interne (2).

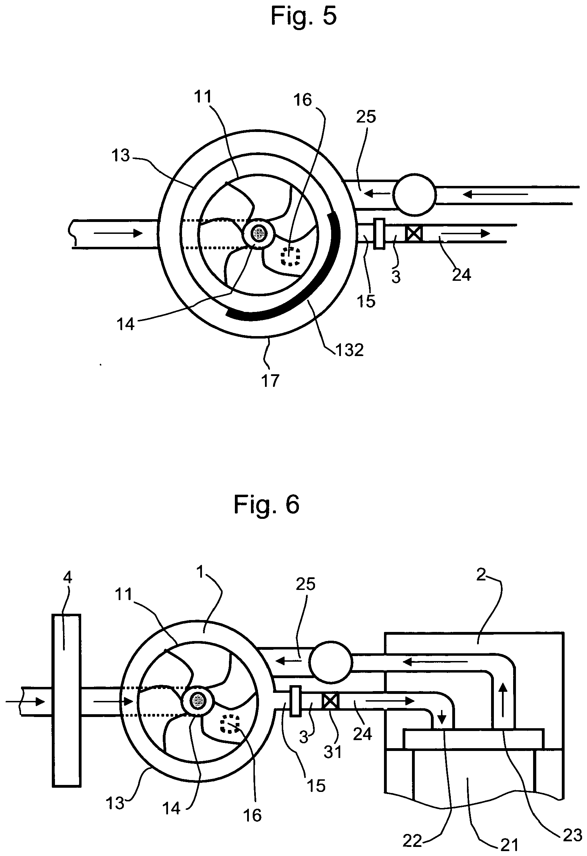

Une variante du dispositif de centrifugation de l'air (1) objet de la présente invention, consiste à prévoir la récupération du dioxygène grâce à une zone poreuse (132), perméable aux molécules de dioxygène et située sur l'enveloppe (13), à proximité de la circonférence de la roue (11), (Fig. 5). Dans ce cas également, une deuxième enveloppe (17), recouvrant la première enveloppe (13), permettra de récupérer le dioxygène extrait pour le diriger vers le circuit d'alimentation d'air (24) du moteur à combustion interne (2).

Une variante de l'invention consiste à ajouter un dispositif de refroidissement d'air (4), (Fig. 6), situé en amont du dispositif de centrifugation de l'air (1), afin de réduire dans une certaine mesure l'agitation moléculaire des gaz avant centrifugation. Ledit dispositif de refroidissement d'air (4) ne sera pas décrit ici, mais peut être de même nature que les dispositifs bien connus dans l'état de l'art, par exemple de type échangeur air/air ou encore échangeur air/liquide, utilisés pour refroidir l'air de suralimentation fourni par les turbocompresseurs.

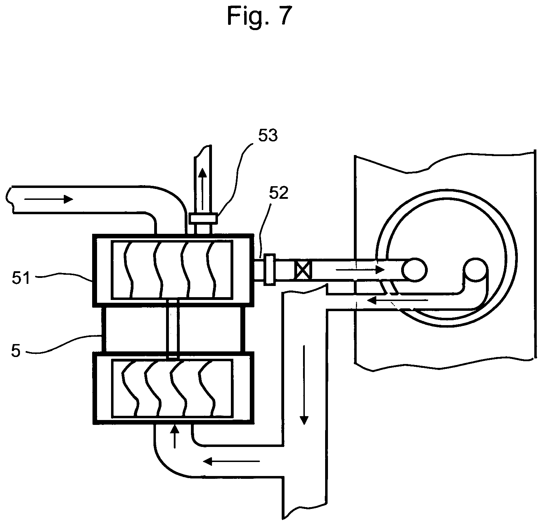

Une variante de l'invention consiste à modifier l'enveloppe (51) d'un turbocompresseur (5), (Fig. 7), par ajout d'un ou plusieurs orifices (52) placés sur la périphérie dudit turbocompresseur (5), afin de récupérer les molécules de dioxygène présentes dans cette zone. Un orifice (53) placé sur l'enveloppe (51) du turbocompresseur (5), en position intermédiaire entre l'axe de ce dernier et la périphérie de l'enveloppe (51), permettra d'évacuer le di-azote. Cette solution permet de combiner en un seul et même organe, les fonctions de suralimentation et de séparation du dioxygène et du di-azote par centrifugation.

## Revendications

1. Dispositif de centrifugation de l'air, associé à un moteur à combustion interne (2), lequel comporte au moins un cylindre (21), alimenté en air par une arrivée d'air (22), et rejetant les gaz de combustion par un orifice d'échappement (23), ledit dispositif de centrifugation de l'air (1) comportant une roue (11), montée sur un axe (12) et placée dans une enveloppe (13) contenant ladite roue (11), ladite enveloppe (13) étant de forme préférentiellement circulaire, l'ensemble étant pourvu d'au moins un orifice d'aspiration de l'air (14) et d'au moins deux sorties distinctes (15) et (16) prévues pour récupérer séparément les molécules de dioxygène d'une part, à la sortie (15), et de di-azote d'autre part, à la sortie (16), tandis qu'au moins une conduite de raccordement (3) est prévue entre la sortie (15) de récupération du dioxygène et le circuit d'alimentation d'air (24) du moteur à combustion interne (2), **caractérisé par le fait que** :
- ladite roue (11) dispose d'ailettes, conçues selon l'état de l'art, permettant d'accélérer les gaz par entraînement rotatif, l'axe (12) de la roue (11) étant entraîné en rotation à très grande vitesse, au moyen d'une turbine (18) placée en série avec des éléments de la ligne d'échappement (25) du moteur à combustion interne (2);
- l'orifice d'aspiration de l'air (14) est situé au niveau de la partie centrale de l'enveloppe (13) du dispositif de centrifugation de l'air (1), tandis que la sortie (15) prévue pour récupérer le dioxygène est située sur l'enveloppe (13) à une position proche de la périphérie de la roue (11), alors que la sortie (16) prévue pour évacuer le di-azote est également située sur l'enveloppe (13), mais à une position intermédiaire entre le centre de la roue (11) et la périphérie de ladite roue (11); et
- la forme de l'enveloppe (13), pour la partie située à proximité de la périphérie de la roue (11), comporte une section élargie (131), permettant de constituer une lame de gaz d'épaisseur adaptée, correspondant à la concentration optimale en dioxygène.

2. Dispositif de centrifugation de l'air selon la revendication 1, **caractérisé en ce que** la récupération du dioxygène se fait grâce à une multitude d'orifices de faibles dimensions situés sur l'enveloppe (13), à proximité de la circonférence de la roue (11), tandis qu'une deuxième enveloppe (17), recouvrant la première enveloppe (13), permet de récupérer le dioxygène extrait pour le diriger vers le circuit d'alimentation d'air (24) du moteur à combustion interne (2).

3. Dispositif de centrifugation de l'air selon la revendication 1, **caractérisé en ce qu'**une zone poreuse (132), perméable aux molécules de dioxygène, est située sur l'enveloppe (13), à proximité de la circonférence de la roue (11), tandis qu'une deuxième enveloppe (17), recouvrant la première enveloppe (13), permet de récupérer le dioxygène extrait pour le diriger vers le circuit d'alimentation d'air (24) du moteur à combustion interne (2).

4. Dispositif de centrifugation de l'air selon l'une des revendications 1 à 3, **caractérisé en ce qu'**un dispositif de refroidissement d'air (4) est situé en amont du dispositif de centrifugation de l'air (1).

5. Dispositif de centrifugation de l'air selon l'une des revendications 1 à 4, **caractérisé en ce que** un ou plusieurs orifices (52) sont placés sur la périphérie de l'enveloppe (51) d'un turbocompresseur (5), afin de récupérer le dioxygène, tandis qu'un orifice (53) est placé sur l'enveloppe (51) dudit turbocompresseur (5), en position intermédiaire entre l'axe de ce dernier et la périphérie de l'enveloppe (51), permettant d'évacuer le di-azote.

## Patentansprüche

1. Luftzentrifugenvorrichtung, die einem Verbrennungsmotor (2) zugeordnet ist, der zumindest einen Zylinder (21) enthält, der über eine Luftzufuhr (22) mit Luft versorgt wird und über eine Ableitöffnung (23) Verbrennungsgase ableitet, wobei die Luftzentrifugenvorrichtung (1) ein Rad (11) aufweist, das auf einer Achse (12) montiert und in einer das Rad (11) beinhaltenden Ummantelung (13) angeordnet ist, wobei die Ummantelung (13) eine vorzugsweise kreisrunde Form hat, wobei die Einheit mit zumindest einer Luftansaugöffnung (14) und zumindest zwei verschiedenen Auslässen (15) und (16) versehen ist, die dazu vorgesehen sind, separat die Moleküle einerseits von Disauerstoff am Auslass (15) und andererseits von Distickstoff am Auslass (16) zu gewinnen, während zumindest eine Anschlussleitung (3) zwischen dem Auslass (15) zum Gewinnen von Disauerstoff und dem Luftversorgungskreis (24) des Verbrennungsmotors (2) vorgesehen ist, **dadurch gekennzeichnet, dass**
- das Rad (11) über Flügel verfügt, die nach dem Stand der Technik ausgebildet sind und gestatten, die Gase durch Drehantrieb zu beschleunigen, wobei die Achse (12) des Rades (11) mit sehr hoher Geschwindigkeit drehend angetrieben wird, und zwar mit Hilfe von einer Turbine (18), die mit Elementen des Abgasstrangs (25) des Verbrennungsmotors (2) in Reihe angeordnet ist,
- die Luftansaugöffnung (14) im Bereich des Mittelabschnitts der Ummantelung (13) der Luftzentrifugenvorrichtung (1) liegt, während der zum Gewinnen von Disauerstoff vorgesehene Auslass (15) sich an der Ummantelung (13) in einer Position nahe am Umfang des Rades (11) befindet, wohingegen der zum Ableiten von Distickstoff vorgesehene Auslass (16) sich auch an der Ummantelung (13) befindet, jedoch in einer Zwischenposition zwischen dem Mittelpunkt des Rades (11) und dem Umfang des Rades (11), und
- die Form der Ummantelung (13) bei dem nahe am Umfang des Rades (11) befindlichen Teil einen erweiterten Querschnitt (131) aufweist, mit dem es möglich ist, eine Gasschicht mit geeigneter Dicke zu bilden, die der optimalen Disauerstoff-Konzentration entspricht.

2. Luftzentrifugenvorrichtung nach Anspruch 1,
**dadurch gekennzeichnet, dass** die Gewinnung von Disauerstoff aufgrund einer Mehrzahl von Öffnungen mit geringen Abmessungen erfolgt, die an der Ummantelung (13) nahe am Umfang des Rades (11) liegen, während eine zweite Ummantelung (17), die die erste Ummantelung (13) überdeckt, gestattet, den entzogenen Disauerstoff zu gewinnen, um ihn dem Luftversorgungskreis (24) des Verbrennungsmotors (2) zuzuleiten.

3. Luftzentrifugenvorrichtung nach Anspruch 1,
**dadurch gekennzeichnet, dass** ein für Disauerstoff-Moleküle durchlässiger, poröser Bereich (132) sich an der Ummantelung (13) nahe am Umfang des Rades (11) befindet, wohingegen eine zweite Ummantelung (17), die die erste Ummantelung (13) überdeckt, gestattet, den entzogenen Disauerstoff zu gewinnen, um ihn dem Luftversorgungskreis (24) des Verbrennungsmotors (2) zuzuleiten.

4. Luftzentrifugenvorrichtung nach einem der Ansprüche 1 bis 3,
**dadurch gekennzeichnet, dass** eine Luftkühlvorrichtung (4) der Luftzentrifugenvorrichtung (1) vorgelagert ist.

5. Luftzentrifugenvorrichtung nach einem der Ansprüche 1 bis 4,
**dadurch gekennzeichnet, dass** eine oder mehrere Öffnungen (52) am Umfang der Ummantelung (51) eines Turbokompressors (5) angeordnet sind, um Disauerstoff zu gewinnen, während eine Öffnung (53) an der Ummantelung (51) des Turbokompressors (5) in einer Zwischenposition zwischen der Achse des letztgenannten und dem Umfang der Ummantelung (51) angeordnet ist, die das Ableiten von Distickstoff gestattet.

## Claims

1. Air centrifugation device, associated to an internal combustion engine (2), which comprises at least one cylinder (21), provided with air by an air intake (22), and rejecting combustion gases by an exhaust orifice (23), the said air centrifugation device (1) comprising a wheel (11), mounted on an axle (12) and placed inside an envelope (13) containing the said wheel (11), the said envelope (13) having preferably a circular shape, the whole system comprising at least one air intake orifice (14) and at feast two distinct exhaust orifices (15) and (16), provided to collect separately the oxygen molecules from exhaust orifice (15), on the one hand, and the nitrogen molecules from exhaust orifice (16), on the other hand, while at least one connecting pipe (3) is provided between the oxygen exhaust orifice (15) and the air inlet system (24) of the internal combustion engine (2), being **characterized by**:
- the said wheel (11) comprises blades, designed according to the state of the art, intended to accelerate the gases by a rotational movement, the axle (12) of wheel (11) being driven at a very high rotation speed, by the means of a turbine (18) placed in line with some elements of the exhaust system (25) of the internal combustion engine (2),
- the air intake orifice (14) is placed near the central part of envelope (13) of the said air centrifugation device (1), while the exhaust orifice (15) provided to collect the oxygen is located on envelope (13), at a position near the periphery of the wheel (11), whereas the exhaust orifice (16) provided to evacuate the nitrogen is also located on envelope (13), but at an intermediate position between the axis of wheel (11) and the periphery of said wheel (11); and
- the shape of envelope (13), for the part located near the periphery of wheel (11), comprises a wider cross section (131), allowing to generate a strip of gas of an appropriate thickness to obtain optimal oxygen concentration.

2. Air centrifugation device as described in claim 1, **characterized by** the fact that the oxygen is collected by the means of multiple small size orifices located on envelope (13), near the circumference of the wheel (11), while a second envelope (17), covering the first envelope (13), allows to collect the oxygen extracted and canalize the said oxygen towards the air inlet system (24) of the internal combustion engine (2).

3. Air centrifugation device as described in claim 1, **characterized by** the fact that a porous area (132), permeable to oxygen molecules, is located on envelope (13), close to the circumference of wheel (11), while a second envelope (17), covering the first envelope (13), allows to collect the oxygen extracted and canalize the said oxygen towards the air inlet system (24) of the internal combustion engine (2).

4. Air centrifugation device as described in one of claims 1 to 3, **characterized by** the fact that an air cooling device (4) is located upstream of the air centrifugation device (1).

5. Air centrifugation device as described in one of claims 1 to 4, **characterized by** the fact that one or several orifices (52) are placed on the periphery of the envelope (51) of a turbocharger (5), in order to collect the oxygen, while an orifice (53) is placed on the envelope (51) of the said turbocharger (5), in an intermediate position between the axis of the later and the periphery of envelope (51), allowing to evacuate the nitrogen.
